**Europäisches Patentamt**

**European Patent Office**

**Office européen des brevets**

(11) Veröffentlichungsnummer: **0 124 030 B1**

(12) **EUROPÄISCHE PATENTSCHRIFT**

(45) Veröffentlichungstag der Patentschrift:
**16.09.87**

(21) Anmeldenummer: **84104424.1**

(22) Anmeldetag: **18.04.84**

(51) Int. Cl.⁴: **H 04 B 3/44**, G 05 F 1/46

(54) **Stromversorgung für seriengespeiste elektronische Schaltungen.**

(30) Priorität: **28.04.83 DE 3315393**

(43) Veröffentlichungstag der Anmeldung:
**07.11.84 Patentblatt 84/45**

(45) Bekanntmachung des Hinweises auf die Patenterteilung:
**16.09.87 Patentblatt 87/38**

(84) Benannte Vertragsstaaten:
**AT BE CH DE FR GB IT LI NL SE**

(56) Entgegenhaltungen:
**DE - A - 2 939 546**
**DE - A - 3 018 614**
**US - A - 4 049 929**
**US - A - 4 075 546**
**US - A - 4 241 243**

**ELECTRONICS, Band 44, Nr. 5, 1. März 1971, Seite 57, New York; USA; R.D. PIERCE: "Op amp splits supply for other op amps"**

(73) Patentinhaber: **Siemens Aktiengesellschaft Berlin und München, Wittelsbacherplatz 2, D-8000 München 2 (DE)**

(72) Erfinder: **Winnicki, von, Kalixt, Ortenburgstrasse 6, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Stromversorgung für seriengespeiste elektronische Schaltungen mit einer Z-Diode zwischen den Anschlussklemmen für den Speisestrom, mit einer Gleichrichterdiode und mit einem über einen Ladewiderstand daran angeschlossenen Ladekondensator, an den als Verbraucher die elektronischen Schaltungen angeschlossen sind.

Bei der Übertragung digitaler Daten werden in vorgegebenen Abständen regenerative Zwischenverstärker (Repeater, Regenerator) eingesetzt. Die Spannungsversorgung der Zwischenverstärker erfolgt im allgemeinen in Serienspeisung. Hierbei wird ein konstanter Strom von ca. 50 mA von einer Endstelle, im allgemeinen über Mittelanzapfungen von Transformatoren, eingespeist und fliesst nach einer Schleifenbildung über die rückgerichtete Datenverbindung zurück. Zur Spannungsversorgung der Zwischenverstärker wird durch eine Z-Diode, eine Gleichrichterdiode und einen Ladekondensator eine konstante Spannung gewonnen.

Eine derartige Stromversorgung ist aus der Zeitschrift NTC 1977, Seiten 44:1-1 bis 1-4, bekannt. In dieser Literaturstelle sind auch bereits Probleme beschrieben, die durch Störspannungen verursacht werden. Um diese Störspannungen klein zu halten, wird die Kapazität des Ladekondensators so gross wie möglich gewählt. Bei einem kurzzeitig zusammenbrechenden Versorgungsstrom schaltet die Gleichrichterdiode ab, und die Schaltungsanordnung wird von dem Ladekondensator versorgt.

In der US-PS 4 241 243 ist eine Stromregelung für Signalregeneratoren beschrieben, die als Vorwärtsregelung mit einem zum Verbraucher parallel liegenden Regeltransistor arbeitet.

Über eine Entkopplungsdiode wird über einen weiteren Stromweg ein Speicherkondensator aufgeladen, und im Bedarfsfall wird die Ladung des Transistors über einen ersten Transistor dem Verbraucher zugeführt. Die Schaltung ist sehr aufwendig.

In der US-PS 4 075 546 ist ein kombinierte Serien- und Parallelregelung beschrieben, deren Eingang bereits eine feste, nicht mit Störungen behaftete Gleichspannung zugeführt wird. Die Steuerung erfolgt durch die Verwendung komplementärer Transistoren über einen einzigen Regler. Diese Schaltung weist keine bei einer Serienstromversorgung erforderlichen Siebmittel auf noch verfügt sie über einen Energiespeicher, um den Verbraucher bei durch Störungen verursachten zu geringen Eingangsstrom zu versorgen. Ausserdem ist die Verlustleistung dieser Schaltungsanordnung für seriengespeiste Schaltungen zu hoch.

In der Zeitschrift «Electronics», March 1, 1971, Vol.: 44, Seite 57, ist eine Schaltungsanordnung zur Erzeugung symmetrischer Spannungen angegeben, die einen eigenen Spannungsteiler am Eingang eines Operationsverstärkers verwendet.

Aus der DE-OS 29 39 546 ist eine Schaltung zur Spannungsversorgung für ferngespeiste digitale Teilnehmerstationen beschrieben, die nur eine Serienregelung aufweist. P 1 Or / 16.1.1986.

Als Störungen des Speisestroms sind Ströme kleiner als 5 mA eff. bei ca. 16 Hz üblich. In krassen Fällen können jedoch auch Stromschwankungen von 50 mA effektiv auftreten. Kurzzeitig treten sogar Störungen von 10 A bei 50 Hz auf; bei Blitzeinschlägen wurden sogar Stromspitzen bis zu 100 A für die Zeitdauer einer Millisekunde gemessen.

Die Störungen wirken sich beispielsweise in den Zwischenverstärkern durch Amplitudenmodulation und Phasenmodulation (Jitter) der übertragenen Daten aus.

Aufgabe der Erfindung ist es, eine Stromversorgung für seriengespeiste elektronische Schaltungen anzugeben, die auch bei grösseren Störungen des Speisestromes eine konstante Spannung abgibt.

Vom eingangs beschriebenen Stand der Technik ausgehend, wird diese Aufgabe dadurch gelöst, dass zwischen dem Ladekondensator und dem Verbraucher nur die Parallelschaltung eines ersten Transistors und eines zweiten Widerstandes eingeschaltet ist, dass parallel zum Verbraucher ein zum ersten Transistor komplementärer zweiter Transistor geschaltet ist und dass ein die Spannung am Verbraucher konstant haltender gemeinsamer Regler mit einem ersten Differenzverstärker zur Ansteuerung des ersten und des zweiten Transistors vorgesehen ist.

Bei dieser Stromversorgung wird die Anordnung von der ersten Zenerdiode, der Gleichrichterdiode, eines Ladewiderstandes und des Ladekondensators beibehalten. Bei normalem Betrieb tritt jedoch die erste Z-Diode nicht in Funktion. Sie begrenzt die nur selten auftretenden extremen Spannungswerte. Die eigentliche Feinregelung der Versorgungsspannung wird von den als steuerbare Transistoren übernommen. Eine Verringerung des Laststromes und zu grosse Speiseströme werden durch Vergrössern der Leitfähigkeit des parallel zum Verbraucher geschalteten zweiten Transistors abgefangen. Ist vorübergehend der Speisestrom kleiner als der Ladestrom und wird hierdurch die Spannung am Verbraucher zu klein, so wird die Leitfähigkeit des ersten steuerbaren Widerstandes vergrössert, bis die Kondensatorspannung direkt am Verbraucher liegt.

Bei diesem Schaltungsaufbau reicht ein gemeinsamer Regler zur Ansteuerung beider steuerbarer Widerstände aus. Hierdurch wird die Schaltungsanordnung vereinfacht.

Durch den als Regler vorgesehenen ersten Differenzverstärker wird ein einfacher Soll-/Istwert-Vergleich möglich. Im allgemeinen werden Operationsverstärker verwendet, die wegen ihrer hohen Verstärkung den Regelfehler extrem klein halten.

Der Strombedarf der Stromversorgung ist sehr gering. Im Grenzfall entspricht der Laststrom dem Speisestrom, und der Stromverbrauch wird nur durch den geringen Eigenverbrauch des Reglers bestimmt.

Es ist vorteilhaft, dass die aus den beiden Transistoren und dem Regler bestehende Regeleinrichtung als Rückwärtsregelung ausgeführt ist. Da bei einer Rückwärtsregelung die Spannungswerte direkt am Verbraucher überprüft werden, ergibt sich ein einfacher Regelkreis mit ausreichender Genauigkeit, wenn die Regeleinrichtung eine grosse Kreisverstärkung aufweist.

Es ist vorteilhaft, dass die Regeleinrichtung als kombinierte Rückwärts-Vorwärtsregelung ausgeführt ist. Durch Kombination von Rückwärts- und Vorwärtsregelung kann – wie allgemein bekannt – der Regelfehler bei sorgfältiger Dimensionierung den Wert Null erreichen.

Es ist zweckmässig, dass als Transistoren Feldeffekttransistoren vorgesehen sind. Als steuerbare Widerstände eignen sich herkömmliche bipolare Transistoren oder Feldeffektransistoren. Bei höheren Strömen werden vorteilhaft parallelgeschaltete Transistoren oder Darlington-Schaltungen eingesetzt.

Es ist zweckmässig, dass der erste Eingang des ersten Differenzverstärkers an eine Referenzspannungsquelle angeschlossen ist, dass der zweite Eingang des Differenzverstärkers über einen ohmschen Spannungsteiler, der parallel zum Verbraucher liegt, angeschlossen ist, dass der Ausgang des ersten Differenzverstärkers über eine vierte Z-Diode mit dem Eingang des als erster regelbarer Widerstand wirkenden ersten Transistors verbunden ist und dass der Ausgang des ersten Differenzverstärkers ebenfalls mit dem Eingang des parallel zum Verbraucher liegenden zweiten Transistors verbunden ist. Hierdurch ergibt sich eine einfache Schaltungsanordnung. Die Pegelanpassung an den Ausgang des Differenzverstärkers erfolgt über Zenerdioden. Da die Transistoren Tr1 und T2 zueinander komplementär (NPN–PNP) sind, öffnet der eine Transistor, wenn der andere Transistor sperrt. Selbstverständlich können sich die Regelbereiche der beiden Transistoren überlappen.

Es ist zweckmässig, dass eine Spannungssymmetrieschaltung zur Erzeugung zweier gleichgrosser Spannungen mit einem zweiten Differenzverstärker als Regler vorgesehen ist, der an dieselbe Referenzspannungsquelle angeschlossen ist. Durch diese Dimensionierung kann die Referenzspannungsquelle ebenfalls für die Spannungssymmetrieschaltung verwendet werden. Durch die Spannungssymmetrieschaltung muss nur eine Regelungseinrichtung zur Erzeugung zweier Spannungen verwendet werden.

Bei der Stromversorgung ist es vorteilhaft, dass sie bei Zwischenverstärkern für Digitalsignale (Regeneratoren, Repeatern) vorgesehen ist. Insbesondere bei Zwischenverstärkern für Digitalsignale wirken sich Störungen aus der Versorgungsspannungsleitung ungünstig aus. Dies wird jedoch durch die angegebene Regelungseinrichtung vermieden.

Die Erfindung wird anhand von Prinzipschaltbildern und eines Ausführungsbeispiels näher beschrieben.

Es zeigen

Fig. 1 das Prinzip der Serienspeisung bei Zwischenverstärkern für Digitalsignale,

Fig. 2 eine verbesserte Ausführung der herkömmlichen Stromversorgung,

Fig. 3 ein Prinzipschaltbild der erfindungsgemässen Stromversorgung und

Fig. 4 ein Ausführungsbeispiel der erfindungsgemässen Stromversorgung.

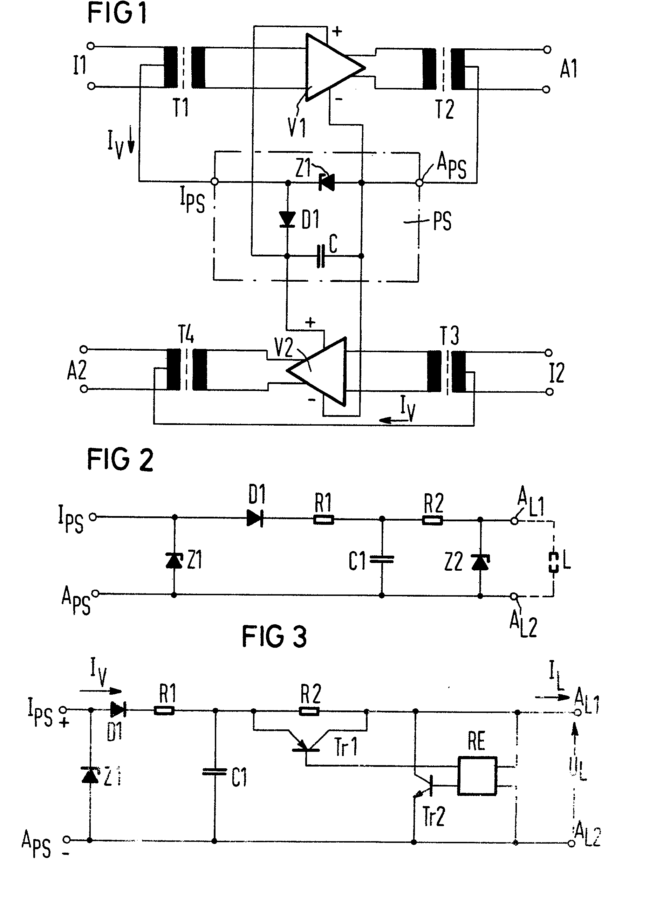

Fig. 1 zeigt einen ersten Zwischenverstärker für Digitalsignale V1, der in die Hinleitung einer Übertragungsstrecke eingefügt ist, und einen zweiten Zwischenverstärker V2, der in die Rückleitung derselben Übertragungsstrecke eingefügt ist. Der erste Zwischenverstärker V1 ist eingangsseitig über einen ersten Transformator T1 und ausgangsseitig über einen zweiten Transformator T2 galvanisch von der Hinleitung getrennt. Der Eingang der Hinleitung ist mit I1, ihr Ausgang mit A1 bezeichnet. Bei der Rückleitung ist der Eingang mit I2 und der Ausgang mit A2 bezeichnet. Der zweite Zwischenverstärker V2 ist ebenfalls galvanisch von der Rückleitung durch die Transformatoren T3 und T4 getrennt. Im allgemeinen sind mehrere Zwischenverstärker in eine Übertragungsstrecke eingefügt. Fig. 1 zeigt einen Abschnitt dieser Übertragungsstrecke. Die Stromversorgung der Zwischenverstärker erfolgt durch Serienspeisung. Von einer Endstelle wird ein konstanter Speisestrom $I_V$ eingespeist. Der Strom fliesst über beide Adern der Hinleitung und wird an der Mittelanzapfung des ersten Transformators T1 entnommen, um über die Stromversorgung PS den Zwischenverstärkern V1 und V2 zugeführt zu werden. Der Eingang der Stromversorgung für den Speisestrom ist mit $I_{PS}$, der Ausgang mit $A_{PS}$ bezeichnet. Über eine Mittelanzapfung des zweiten Transformators T2 fliesst der Strom über die Adern der Hinleitung zum nächsten Zwischenverstärker. Am Ende der Hinleitung oder an einer anderen Stelle wird der Strom in die Rückleitung geschleift. Die Zwischenverstärker werden hierbei wieder über Mittelanzapfung der Transformatoren T3 und T4 umgangen. Im allgemeinen wird nur eine einzige Stromversorgung PS für einen Zwischenverstärker der Hin- und einen Zwischenverstärker der Rückrichtung verwendet. Die Stromversorgung PS besteht aus einer Z-Diode Z1, einer Gleichrichterdiode D1 und einem Ladekondensator C. Der Ladekondensator C dient zur Siebung und zur Stromversorgung, wenn der Speisestrom $I_V$ kurzzeitig durch Störungen unter seinen Sollwert abfällt. An dem Ladekondensator C bleiben jedoch stets Reststörungen vorhanden.

In Fig. 2 ist eine verbesserte Stromversorgung dargestellt. Der Ladekondensator C1 wird über den Eingang $I_{PS}$, die Gleichrichterdiode D1 und den Ladewiderstand R1 aufgeladen.

Die Spannungsstabilisierung wird von einer zweiten Z-Diode Z2 übernommen, die parallel zum Verbraucher L – dieser entspricht dem Zwischenverstärker V1 – liegt. Die Anschlüsse des Verbrauchers L sind mit $A_{L1}$ und $A_{L2}$ bezeichnet. Am Eingang dieser Schaltungsanordnung, zwischen Eingang $I_{PS}$ und Ausgang $A_{PS}$ der Stromversorgung PS, liegt weiterhin die erste Z-Diode Z1. Diese begrenzt die Eingangsspannung der Stromversorgung bei extremen Störungen. Die zweite Z-Diode Z2 sorgt hier zwar für eine bessere Stabilisierung, jedoch bleiben auch hier Reststörungen am Ladekondensator C1. Es ist denkbar, einen zweiten Widerstand R2 zwischen den Ladekondensator C1 und der zweiten Z-Diode Z2 einzuschalten. Dies verbessert zwar die Regelfähigkeit der zweiten Z-Diode Z2, jedoch bewirkt der zweite Widerstand R2 einen weiteren Spannungsabfall, der sich besonders bei zu kleinen Versorgungsströmen als Spannungsschwankung am Verbraucher L bemerkbar macht. Die Versorgung des Verbrauchers erfolgt bei zu geringem Speisestrom allein aus dem Ladekondensator C1, der hierdurch relativ grosse Werte annehmen muss. Die Gleichrichterdiode D1 schaltet bei zu geringem Speisestrom den Ladekondensator von dem Anschlusspunkt $I_{PS}$ ab.

In Fig. 3 ist das Prinzipschaltbild der erfindungsgemässen Stromversorgungseinrichtung dargestellt. Zwischen dem Eingang $I_{PS}$ und dem Ausgang $A_{PS}$ der Stromversorgungseinrichtung liegt wiederum die erste Z-Diode Z1. Über die Gleichrichterdiode D1 und den Ladewiderstand R1 ist der Ladekondensator C1 angeschlossen, dessen zweiter Anschlusspunkt ebenfalls mit dem Ausgang $A_{PS}$ der Stromversorgung verbunden ist. Dieser Teil der Schaltungsanordnung ist mit Fig. 2 identisch. Zwischen dem Ladekondensator C1 und dem Verbraucher – hier ist nur der Ausgangspunkt $A_{L1}$ dargestellt –, ist ein erster Transistor Tr1 als steuerbarer Widerstand eingeschaltet, zu dem ein ohmscher zweiter Widerstand R2 (zwischen Emitter und Kollektor) parallel geschaltet ist. Ein zweiter Transistor Tr2 ist hierbei mit seinen Kollektor-/Emitteranschlüssen parallel zum Verbraucher geschaltet, liegt also zwischen den Ausgangsklemmen $A_{L1}$ und $A_{L2}$. Beide Transistoren Tr1 und Tr2 werden von einem Regler RE gesteuert, dessen Eingänge ebenfalls an die Ausgangsklemmen $A_{L1}$ und $A_{L2}$ angeschaltet sind.

Die erste Z-Diode Z1 dient wiederum zur Begrenzung der Eingangsspannung. Über die beiden Transistoren Tr1 und Tr2 erfolgt die Regelung der Versorgungsspannung $U_L$ an der Last L. Als Eingangsspannung liegt der Regeleinrichtung die Spannung am Ladekondensator C1 vor. Es wird zunächst angenommen, dass sowohl der Speisestrom $I_V$ als auch der Laststrom $I_L$ ihren Sollwert aufweisen. Beide Transistoren Tr1 und Tr2 sind zunächst gesperrt. Verringert sich der Laststrom I, oder vergrössert sich der Versorgungsstrom $I_V$ durch Störungen, so wird der zweite Transistor Tr2 über den Regler RE aufgesteuert. Durch den Spannungsabfall an dem zweiten Widerstand R2 bleibt die Spannung $U_L$ am Verbraucher konstant. Vergrössert sich dagegen vom Sollwert ausgehend der Laststrom $I_L$ oder verringert sich die Spannung durch Störungen am Ladekondensator C1, so wird der erste Transistor Tr1 leitend und bewirkt so einen kleineren Spannungsabfall am zweiten Widerstand R2. Im Extremfall liegt praktisch die Spannung des Ladekondensators C1 am Verbraucher an.

Der erste steuerbare Widerstand darf einen Maximalwert nicht überschreiten, damit im Normalfall die erste Z-Diode Z1 gesperrt bleibt. Dieser Maximalwert wird durch den Widerstand R2 festgelegt. Durch den Spannungsabfall an dem Widerstand R2 und den Ladekondensator C1 wird die Zeitspanne festgelegt, in der noch Laststrom geliefert werden kann, ohne dass ein Speisestrom fliesst.

Bei einer praktischen Ausführung der Stromversorgungseinrichtung überlappen sich die Regelbereiche des ersten Transistors Tr1 und des zweiten Transistors Tr2.

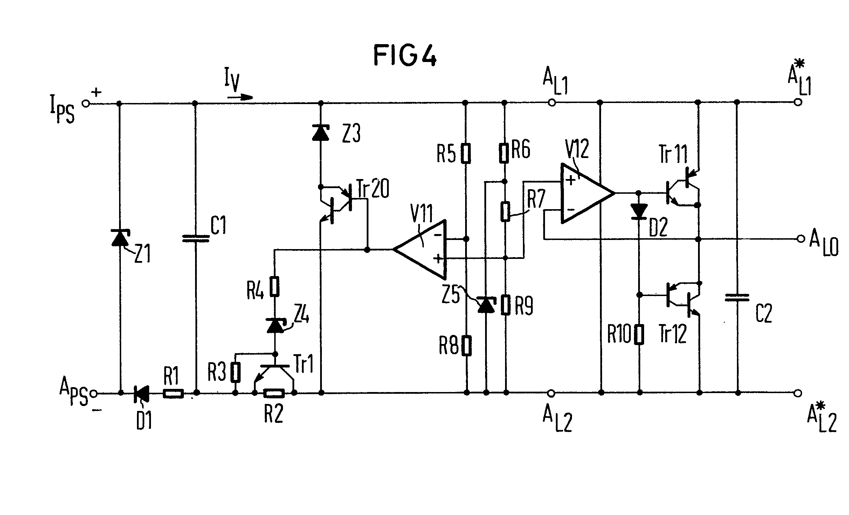

Ein Ausführungsbeispiel der Erfindung ist in Fig. 4 dargestellt. Zwischen den Anschlussklemmen $I_{PS}$ und $A_{PS}$ liegt wiederum die Z-Diode Z1. an. Die Gleichrichterdiode D1 und der Ladewiderstand liegen diesmal in der Rückleitung des Speisestromes $I_V$. Es ist wiederum der Ladekondensator C1 vorgesehen, der hier zwischen dem Ladewiderstand R1 und dem Eingang der Stromversorgungseinrichtung $I_{PS}$ liegt. Der erste Transistor Tr1 liegt als NPN-Transistor in der Rückleitung des Versorgungsstromes $I_V$. Parallel zu ihm ist wieder der zweite Widerstand R2 geschaltet. Ein dritter Widerstand R3 liegt zwischen Basis und Emitter des ersten Transistors Tr1. Über eine vierte Z-Diode Z4 und einen vierten Widerstand R4 ist die Basis des ersten Transistors Tr1 an den Ausgang eines ersten Differenzverstärkers V11 angeschlossen. Als Differenzverstärker kann hierbei ein handelsüblicher Operationsverstärker verwendet werden. Als zweiter Transistor ist eine Darlingtonanordnung Tr20 vorgesehen, deren wirksamer Emitter über eine dritte Z-Diode Z3 mit dem Eingang $I_{PS}$ der Stromversorgung verbunden ist, während der wirksame Kollektor mit der zweiten Ausgangsklemme $A_{L2}$ verbunden ist. Die Darlingtonanordnung Tr20 liegt somit parallel zu den Ausgangsklemmen $A_{L1}$ und $A_{L2}$. Im vorliegenden Schaltungsbeispiel wurde eine PNP–NPN-Darlingtonstufe verwendet. Der Eingang dieser Darlingtonstufe ist ebenfalls mit dem Ausgang des ersten Differenzverstärkers V11 verbunden. Eine Reihenschaltung dreier Widerstände R6, R7 und R9 liegt zwischen den Ausgangsklemmen $A_{L1}$ und $A_{L2}$; am Verbindungspunkt der Widerstände R6 und R7 ist eine fünfte Z-Diode Z5 angeschaltet, die die Referenzspannung für den ersten Eingang (+) des Differenzverstärkers V11 liefert, der am Verbindungspunkt der Widerstände R7 und R9 angeschaltet ist. Der Widerstand R7 dient hierbei zum Abgleich. Über einen Spannungsteiler R5, R8, der ebenfalls zwischen den Ausgangsklemmen $A_{L1}$ und $A_{L2}$ liegt, ist der zweite Eingang (−) des ersten Differenzverstärkers angeschaltet. Dieser Teil der Schaltung entspricht dem Prinzipschaltbild nach Fig. 3.

Da im allgemeinen eine positive und eine negative Versorgungsspannung benötigt wird, ist an die Ausgangsklemmen $A_{L1}$ und $A_{L2}$ eine Spannungssymmetrierschaltung angeschlossen. Diese enthält zwei in Serie geschaltete komplementäre Transistorstufen Tr11 und Tr12, die von einem zweiten Differenzverstärker V12 angesteuert werden. Als komplementäre Transistorstufen sind wiederum komplementäre Darlingtonstufen eingesetzt. Der erste Eingang (+) des zweiten Differenzverstärkers V12 ist an dieselbe Referenzspannung angeschlossen. Der zweite Eingang (−) des zweiten Differenzverstärkers V12 ist an den Verbindungspunkt der beiden Endstufentransistoren Tr11 und Tr12 angeschaltet, an dem das Mittelpotential anliegt. Dies ist auf eine dritte Ausgangsklemme $A_{L0}$ herausgeführt. Der Eingang der ersten komplementären Transistorstufe Tr11 der Spannungssymmetrierschaltung ist direkt mit dem Ausgang des zweiten Differenzverstärkers V12 verbunden. Über eine zweite Diode D2 ist der Eingang der zweiten komplementären Transistorstufe Tr12 angeschlossen. Ein Widerstand R10 verbindet den Eingang der zweiten komplementären Transistorstufe Tr12 mit dem Anschlusspunkt $A_{L2}$. Die Ausgangsklemmen $A_{L1}^{*}$ und $A_{L2}^{*}$ der Spannungssymmetrierschaltung sind mit den Ausgangsklemmen $A_{L1}$ bzw. $A_{L2}$ der eigentlichen Stromversorgungseinrichtung identisch. Zwischen ihnen liegt die Reihenschaltung der komplementären Transistorstufen Tr11 und Tr12, deren zusammengeschaltete $\pi$ Emitter mit der Ausgangsklemme $A_{L0}$ verbunden sind. An der Ausgangsklemme $A_{L1}^{*}$ liegt ein positives Potential und an der Ausgangsklemme $A_{L2}^{*}$ ein negatives Potential an, jeweils bezogen auf die Klemme $A_{L0}$. Ein zweiter Kondensator C2 liegt zur nochmaligen Siebung zwischen den Ausgangsklemmen $A_{L1}^{*}$ und $A_{L2}^{*}$.

Dies Ausführungsbeispiel der Stromversorgungseinrichtung ist in der Funktion mit dem Prinzipschaltbild in Fig. 3 identisch. Durch die dritte Z-Diode Z3 und die vierte Z-Diode Z4 wird jeweils eine Potentialverschiebung herbeigeführt, die es gestattet, einen einzigen Regler, hier den Differenzverstärker V11 zu verwenden. Über die Z-Diode Z5 und die Reihenschaltung der Widerstände R6, R7 und R9 wird eine Referenzspannung gewonnen, mit der die zwischen den Ausgangsklemmen $A_{L1}$ und $A_{L2}$ liegende Spannung $U_L$ verglichen wird. Dies erfolgt über den Spannungsteiler R5, R8, an den der zweite Eingang (−) des ersten Differenzverstärkers V11 angeschaltet ist. Der Transistor Tr1 ist komplementär zu der Darlingtonanordnung Tr20. Wenn beispielsweise die Darlingtonanordnung Tr20 weiter aufgesteuert wird, wird hierdurch der erste Transistor Tr1 weiter bzw. völlig gesperrt und umgekehrt.

Da die Referenzspannung exakt der halben Sollverbraucherspannung entspricht, kann diese Referenzspannung ebenfalls als Referenzspannung für die Spannungssymmetrierschaltung verwendet werden.

## Patentansprüche

1. Stromversorgung für seriengespeiste elektronische Schaltungen mit einer Z-Diode (Z1) zwischen den Anschlussklemmen ($I_{PS}$, $A_{PS}$) für den Speisestrom ($I_V$), mit einer Gleichrichterdiode (D1) und mit einem über einen Ladewiderstand (R1) daran angeschlossenen Ladekondensator (C1), an den als Verbraucher (L) die elektronische Schaltung angeschlossen ist, dadurch gekennzeichnet, dass zwischen dem Ladekondensator (C1) und dem Verbraucher (L) nur die Parallelschaltung eines ersten Transistors (Tr1) und eines zweiten Widerstandes (R2) eingeschaltet ist, dass parallel zum Verbraucher (L) ein zum ersten Transistor (Tr1) komplementärer zweiter Transistor (Tr2) geschaltet ist und dass ein die Spannung am Verbraucher (L) konstant haltender gemeinsamer Regler (RE) mit einem ersten Differenzverstärker (V11) zur Ansteuerung des ersten und des zweiten Transistors (Tr1, Tr2) vorgesehen ist.

2. Stromversorgung nach Anspruch 1, dadurch gekennzeichnet, dass die aus den beiden Transistoren (Tr1, Tr2) und dem Regler (RE) bestehende Regeleinrichtung als Rückwärtsregelung ausgeführt ist.

3. Stromversorgung nach Anspruch 1, dadurch gekennzeichnet, dass die Regeleinrichtung (Tr1, Tr2, RE) als kombinierte Rückwärts-Vorwärtsregelung ausgeführt ist.

4. Stromversorgung nach einem der vorhergehenden Ansprüche, dadurch gekennzeichnet, dass als Transistoren (Tr1, Tr2) Feldeffekttransistoren vorgesehen sind.

5. Stromversorgung nach einem der vorhergehenden Ansprüche, dadurch gekennzeichnet, dass der erste Eingang (+) des ersten Differenzverstärkers (V11) an eine Referenzspannungsquelle (R6, R7, R9, Z5) angeschlossen ist, dass der zweite Eingang (−) des Differenzverstärkers (V11) über einen ohmschen Spannungsteiler (R5, R8), der parallel zum Verbraucher (L) liegt, angeschlossen ist, dass der Ausgang des ersten Differenzverstärkers (V11) über eine vierte Z-Diode (Z4) mit dem Eingang des ersten Transistors (Tr1) verbunden ist und dass der Ausgang des ersten Differenzverstärkers (V11) ebenfalls mit dem Eingang des parallel zum Verbraucher liegenden zweiten Transistors (Tr20) verbunden ist.

6. Stromversorgung nach Anspruch 5, dadurch gekennzeichnet, dass eine Spannungssymmetrierschaltung zur Erzeugung zweier gleichgrosser Spannungen mit einem zweiten Differenzverstärker (V12) als Regler vorgesehen ist, der an dieselbe Referenzspannungsquelle (R6, R7, R9, Z5) angeschlossen ist.

7. Stromversorgung nach einem der vorhergehenden Ansprüche, dadurch gekennzeichnet, dass sie bei Zwischenverstärkern für Digitalsignale (Regeneratoren, Repeatern) vorgesehen ist.

## Revendications

1. Système d'alimentation en courant pour des circuits électroniques alimentés en série, comportant une diode Zener (Z1) disposée entre les bornes de raccordement ($I_{PS}$, $A_{PS}$) pour le courant d'alimentation ($I_V$), une diode de redressement (D1) et un condensateur de charge (C1) raccordé à cette diode par l'intermédiaire d'une résistance de charge (R1) et auqeul le circuit électronique est raccordé en tant qu'appareil d'utilisation (L), caractérisé par le fait que seul le montage en parallèle formé d'un premier transistor (Tr1) et d'une seconde résistance (R2) est branché entre le condensateur de charge (C1) et l'appareil d'utilisation (L), qu'un second transistor (Tr2) complémentaire du premier transistor (Tr1) est branché en parallèle avec l'appareil d'utilisation (L), et qu'il est prévu un régulateur (RE), qui maintient constante la tension appliquée aux bornes de l'appareil d'utilisation (L) et contient un premier amplificateur différentiel (V11) servant à commander les premier et second transistors (Tr1, Tr2).

2. Système d'alimentation en courant suivant la revendication 1, caractérisé par le fait que le dispositif de réglage constitué par les deux transistors (Tr1, Tr2) et le régulateur (RE) est réalisé sous la forme d'un circuit de réglage rétrograde.

3. Système d'alimentation en courant suivant la revendication 1, caractérisé par le fait que le dispositif de régulation (Tr1, Tr2, RE) est réalisé sous la forme d'un circuit combiné de réglage rétrograde-direct.

4. Système d'alimentation en courant suivant l'une des revendications précédentes, caractérisé par le fait qu'il est prévu, comme transistors (Tr1, Tr2), des transistors à effet de champ.

5. Système d'alimentation en courant suivant l'une des revendications précédentes, caractérisé par le fait que la première entrée (+) du premier amplificateur différentiel (V11) est raccordée à une source de tension de référence (R6, R7, R9, Z5), que la seconde entrée (−) de l'amplificateur différentiel (V11) est raccordée par l'intermédiaire d'un diviseur ohmique de tension (R5, R8), qui est branché en parallèle avec l'appareil d'utilisation (L), que la sortie du premier amplificateur différentiel (V11) est reliée par l'intermédiaire d'une quatrième diode Zener (Z4) à l'entrée du premier transistor (Tr1), et que la sortie du premier amplificateur différentiel (V11) est également reliée à l'entrée du second transistor (Tr2) branché en parallèle avec l'appareil d'utilisation.

6. Système d'alimentation en courant suivant la revendication 5, caractérisé par le fait qu'il est prévu un circuit de symétrisation de tension servant à produire deux tensions de même valeur et comportant un second amplificateur différentiel (V12) en tant que régulateur qui est raccordé à cette même source de tension de référence (R6, R7, R9, Z5).

7. Système d'alimentation en courant suivant l'une des revendications précédentes, caractérisé par le fait qu'il est prévu dans des amplificateurs intermédiaires pour des signaux numériques (régénérateurs, répéteurs).

## Claims

1. A current supply for series-fed, electronic circuits comprising a Zener diode (Z1) between the connection terminals ($I_{PS}$, $A_{PS}$) for the supply current ($I_V$), a rectifier diode (D1) connected to a charging capacitor (C1) via a charging resistor (R1), and to which the electronic circuit is connected as a load (L), characterised in that only the parallel arrangement of a first transistor (Tr1) and a second resistor (R2) is connected between the charging capacitor (C1) and the load (L), whilst a second transistor (Tr2), complementary to the first transistor (Tr1), is connected in parallel to the load (L), and that a common regulator (RE), which maintains a constant voltage across the load (L), comprises a first differential amplifier (V11) to drive the first and second transistors (Tr1, Tr2).

2. A current supply as claimed in Claim 1, characterised in that the regulating device which consists of the two transistors (Tr1, Tr2) and the regulator (RE) consists of a backwards regulating device.

3. A current supply as claimed in Claim 1, characterised in that the regulating device (Tr1, Tr2, RE) consists of a combined backwards-forwards regulating device.

4. A current supply as claimed in one of the preceding Claims, characterised in that the transistors (Tr1, Tr2) consist of field-effect transistors.

5. A current supply as claimed in one of the preceding Claims, characterised in that the first input (+) of the first differential amplifier (V11) is connected to a reference voltage source (R6, R7, R9, Z5), that the second input (−) of the differential amplifier (V11) is connected via an ohmic potential divider (R5, R8) arranged in parallel to the load (11), that the output of the first differential amplifier (V11) is connected via a fourth Zener diode (Z4) to the input of the first transistor (Tr1) and that the output of the first differential amplifier (V11) is likewise connected to the input of the second transistor (Tr20), which is arranged in parallel to the load.

6. A current supply as claimed in Claim 5, characterised in that a voltage-balancing circuit connected to the same reference voltage source (R6, R7, R9, Z5) comprising a second differential amplifier (V12) is provided as regulator producing two equal voltages.

7. A current supply as claimed in one of the preceding Claims, characterised in that it is utilised for intermediate amplifiers of digital signals (regenerators, repeaters.)

0 124 030

FIG 1  1/2

FIG 2

FIG 3

7

FIG 4